# EUROPÄISCHE PATENTANMELDUNG

(11) **EP 4 647 964 A1**
(43) Veröffentlichungstag der Anmeldung: **12.11.2025**
(21) Anmeldenummer: 25174242.5
(22) Anmeldetag: 05.05.2025
(51) Int. Cl.: G06K 19/077, B42D 25/455, B42D 25/46, B42D 25/47

(54) **DOKUMENT MIT INTEGRIERTER ELEKTRONISCHER KOMPONENTE UND VERFAHREN ZU SEINER HERSTELLUNG**

(30) Priorität: 08.05.2024 DE 102024113029
(71) Anmelder: Bundesdruckerei GmbH, 10969 Berlin (DE)
(72) Erfinder: ARNDT, Philipp, 13189 Berlin (DE); SAUTER, Dieter, 83727 Schliersee (DE); PÜSCHNER, Frank, 93309 Kelheim (DE); STAMPKA, Peter, 93133 Burglengenfeld (DE); OLSZOWKA, Violetta, 90513 Zirndorf (DE); LUTZ, Norbert, 90607 Rückersdorf (DE)
(74) Vertreter: Patentship Patentanwaltsgesellschaft mbH

(57) **Zusammenfassung**

Verfahren (100) zum automatisierten Herstellen eines Sicherheitsdokuments, mit: Bereitstellen (101) eines Substrates mit einer Kavität, welche eine Innenkontur aufweist, die an eine Außenkontur eines integrierten elektronischen Bauelements angepasst ist, so dass das integrierte elektronische Bauelement unter lagegenauer Positionierung relativ zu der Kavität in die Kavität des Substrates einbringbar ist; Bereitstellen (103) eines Patches, wobei das Patch eine Abmessung aufweist, die größer ist als eine Abmessung der Kavität, so dass das Patch unter lagegenauer Positionierung des Patches relativ zu der Kavität auf dem Substrat aufbringbar ist und die Kavität abdeckt; automatisches Einbringen (105) des integrierten elektronischen Bauelements in die Kavität des Substrates unter lagegenauer Positionierung des integrierten elektronischen Bauelements relativ zu der Kavität; und automatisches Aufbringen (107) des Patches auf das Substrat und Abdecken, insbesondere Verschließen, der Kavität mit dem eingebrachten integrierten elektronischen Bauelement durch das Patch unter lagegenauer Positionierung des Patches relativ zu der Kavität des Substrates.

## Beschreibung

Die vorliegende Erfindung betrifft ein Sicherheitsdokument mit einem integrierten elektronischen Bauelement und ein Verfahren zu dessen Herstellung. Hierbei werden hohe Anforderungen an die Integrität des elektronischen Bauelements gestellt, um beispielsweise zu vermeiden, dass das elektronische Bauelement unberechtigt in ein weiteres Sicherheitsdokument eingebaut wird.

Es ist daher eine Aufgabe der vorliegenden Erfindung, ein Sicherheitsdokument mit erhöhten Sicherheitsanforderungen bereitzustellen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Gemäß einem ersten Aspekt wird die erfindungsgemäße Aufgabe gelöst durch ein Verfahren zum automatisierten Herstellen eines Sicherheitsdokuments, mit: Bereitstellen eines Substrates mit einer Kavität, wobei die Kavität eine Innenkontur aufweist, die an eine Außenkontur eines integrierten elektronischen Bauelements angepasst ist, so dass das integrierte elektronische Bauelement unter lagegenauer Positionierung des integrierten elektronischen Bauelements relativ zu der Kavität in die Kavität des Substrates einbringbar ist; Bereitstellen eines Patches, wobei das Patch eine Abmessung aufweist, die größer ist als eine Abmessung der Kavität, so dass das Patch unter lagegenauer Positionierung des Patches relativ zu der Kavität auf dem Substrat aufbringbar ist und die Kavität abdeckt; automatisches Einbringen des integrierten elektronischen Bauelements in die Kavität des Substrates unter lagegenauer Positionierung des integrierten elektronischen Bauelements relativ zu der Kavität; und automatisches Aufbringen des Patches auf das Substrat und Abdecken, insbesondere Verschließen, der Kavität mit dem eingebrachten integrierten elektronischen Bauelement durch das Patch unter lagegenauer Positionierung des Patches relativ zu der Kavität des Substrates. Dadurch wird der technische Vorteil erreicht, dass sich das Sicherheitsdokument mit erhöhter Register- oder Passergenauigkeit herstellen lässt.

Unter Register- oder Passergenauigkeit ist eine Lagegenauigkeit zweier oder mehrerer Elemente und/oder Schichten relativ zueinander zu verstehen. Dabei kann sich die Register- oder Passergenauigkeit des Sicherheitsdokuments innerhalb eines vorgegebenen Toleranzbereichs bewegen, der möglichst gering sein kann. Die Registergenauigkeit von mehreren Elementen und/oder Schichten zueinander kann die Prozesssicherheit erhöhen. Ferner kann beispielsweise die lagegenaue Positionierung, insbesondere bei zumindest teilweise transparentem Patch, als Sicherheitsmerkmal des Sicherheitsdokuments zur Überprüfung der Echtheit des Sicherheitsdokuments erfasst werden. Die lagegenaue Positionierung kann dabei insbesondere sensorisch, vorzugsweise mittels optisch detektierbarer Markierungen, Passermarken oder Registermarken erfolgen. Diese detektierbaren Markierungen, Passermarken oder Registermarken können dabei entweder spezielle separate Elemente oder Bereiche oder Schichten darstellen oder selbst Teil der zu positionierenden Elemente oder Bereiche oder Schichten sein.

Das automatische Aufbringen des Patches auf das Substrat mit oder ohne integriertes elektronisches Bauelement auf das Substrat kann bei einer Temperatur von 80°C bis 300°C erfolgen, bevorzugt von 100°C bis 240°C, besonders bevorzugt von 100°C bis 190°C. Als vorteilhaft hat sich herausgestellt, wenn das Aufbringen des Patches mit einem Prägedruck von 10 N/cm² bis 10000 N/cm², bevorzugt von 100 N/cm² bis 5000 N/cm², erfolgt. Es kann insbesondere vorgesehen sein, dass das Aufbringen des Patches mit oder ohne elektronisches Bauteil innerhalb einer Zeit von 0,01 s bis 2 s erfolgt.

Das automatische Aufbringen des Patches auf das Substrat kann registergenau mit einer Registergenauigkeit in Längsrichtung in einem Intervall im Bereich von -1,0 mm bis 1,0 mm, bevorzugt von -0,5 mm bis 0,5 mm, und/oder einer Registergenauigkeit in Querrichtung im Bereich von -0,5 mm bis 0,5 mm erfolgen, bevorzugt von -0,3 mm bis 0,3 mm, besonders bevorzugt von -0,2 mm bis 0,2 mm.

Bevorzugt ist die Kavität insbesondere in Längsrichtung um 2,0 mm, bevorzugt um 1,0 mm und/oder insbesondere in Querrichtung um 1,0 mm, bevorzugt um 0,6 mm und besonders bevorzugt um 0,4 mm größer als das integrierte elektronische Bauelement ausgebildet bzw. auszuführen. Dadurch wird der technische Vorteil erzielt, dass insbesondere bei einem automatischen Aufbringen des Patches das integrierte elektronische Bauelement sicher in die Kavität einbringbar ist.

Das integrierte elektronische Bauelement kann aus einem integrierten Schaltkreis bzw. einem Chip, der auf einer Antenne z.B. NFC-Antenne angeordnet und mit ihr verbunden ist, bestehen, insbesondere gemäß einer CiC-Anordnung (CiC: "Chip in Coil"). Dieser Chip kann im flexiblen Antennensubstrat eingebettet oder auf dem Antennensubstrat platziert sein.

Das integrierte elektronische Bauelement kann bevorzugt eine horizontale Abmessung im Bereich von 0,5 mm bis 25 mm, besonders bevorzugt im Bereich von 0,5 mm bis 20 mm aufweisen. Ein Chip des integrierten elektronischen Bauelements kann eine Kantenlänge von 0,1 mm bis 5 mm, besonders bevorzugt im Bereich von 0,1 mm bis 3 mm, aufweisen.

Das integrierte elektronische Bauelement kann bevorzugt eine vertikale Abmessung im Bereich von 10 µm bis 200 µm, besonders bevorzugt im Bereich von 10 µm bis 150 µm aufweisen. Der Chip kann eine Dicke von 10 µm bis 70 µm aufweisen.

Das Sicherheitsdokument kann ein Ausweis- oder Wertdokument sein. Insbesondere ist das Sicherheitsdokument eine Banknote, ein Visum, ein Pass, eine ID-Karte, eine Aktie, eine Geburtsurkunde, eine Anleihe, ein Gutschein, ein Scheck, ein Flugschein, eine hochwertige Eintrittskarte, ein Etikett zur Produktsicherung oder eine Karte.

Das Sicherheitsdokument kann insgesamt ein Flächengewicht von 15 bis 1500 g/m² und besonders bevorzugt von 80 g/m² bis 150 g/m² aufweisen.

Das Substrat für das Sicherheitsdokument kann Papier sein, das beispielsweise aus Baumwolle, insbesondere als Hauptfaserrohstoff, und/oder Flachs, und/oder Leinen als Faserrohstoff hergestellt wurde. Ferner können Cellulose, BOPP, Mischlaminate wie beispielsweise Durasafe^{®} oder nachhaltige Substrate verwendet werden.

Das Substrat kann eine Dicke zwischen 80 µm und 250 µm aufweisen.

Beispielsweise kann das elektronische Bauelement in einem ausgestanzten Fenster eines Banknotensubstrates mit einer vertikalen Abmessung von 90 µm bis 130 µm, gleich Substratdicke, integriert sein. Ein weiteres Beispiel für eine Ausführungsform ist ein Halbfenster bzw. eine partielle Kavität in einem Mehrschichtkörper, bestehend aus zwei äußeren Baumwollschichten, die eine innere Polymerschicht umschließen. Die insbesondere partielle Kavität kann in zumindest einer Schicht des Mehrschichtkörpers ausgeformt sein.

Das Patch kann eine Präge- oder Laminierfolie mit oder ohne ein Sicherheitsmerkmal sein. Bevorzugt liegt das Patch als eine Laminierfolie auf einem Trägersubstrat vor. Das Patch ermöglicht beispielsweise Sicherheitselemente mit Durchsichteigenschaften, mit unterschiedlichen Bildern in Aufsicht und Durchsicht, mit unterschiedlichen Bildern bei Betrachtung von Vorderseite und Rückseite des Substrates oder mit Moirébildern. Auch verschiedene optische Effekte sind möglich, wie nachfolgend detaillierter beschrieben.

Das Patch kann einen Träger umfassen, welcher vorzugsweise eine einschichtige oder mehrschichtige Folie sein kann, deren eine oder mehrere Schichten insbesondere aus folgenden Materialien oder Kombinationen davon bestehen können: PET (Polyethylenterephthalat), PP (Polypropylen), PE (Polyethylen), PEN (Polyethylennaphthalat), PC (Polycarbonat), PVC (Polyvinylchlorid), Kapton (Polyoxydiphenylen-pyromellitimid) oder anderen Polyimiden, PLA (Polylactat), PMMA (Polymethylmethacrylat) oder ABS (Acrylnitrilbutadienstyrol).

Der Träger kann ferner eine Haftvermittlerschicht aufweisen. Diese Haftvermittlerschicht kann bei der Trägerherstellung aufgebracht werden. Die Schichtdicke der Haftvermittlerschicht kann im Bereich von 0,1 µm bis 5 µm liegen.

Die Dicke des Trägers kann insbesondere zwischen 1 µm bis 500 µm liegen, bevorzugt zwischen 6 µm bis 23 µm, weiter bevorzugt zwischen 6 µm bis 16 µm.

Das Patch kann eine Replizierschicht umfassen, welche insbesondere als Replizierlackschicht ausgebildet sein kann. Die Replizierschicht kann eine spezielle, funktionale Schicht sein, in welche optisch variable Strukturen und/oder Reliefstrukturen, insbesondere mittels thermischer Replikation und/oder UV-Replikation, eingebracht und/oder fixiert werden können. Bei einer hybriden Replizierschicht wird diese beispielsweise thermisch repliziert und anschließend mittels Strahlung, beispielsweise mittels UV-Strahlung und/oder zumindest einem Elektronenstrahl, gehärtet. Bei einer UV härtenden Replizierschicht wird diese beispielsweise bei Raumtemperatur repliziert und gleichzeitig mittels Strahlung gehärtet, beispielsweise mittels UV-Strahlung und/oder zumindest einem Elektronenstrahl. Beispielsweise ist es möglich, dass der Lack der Replizierlackschicht bei einer UV-Replikation warm wird. Diese Replizierschicht kann insbesondere eine Schichtdicke zwischen 0,1 µm und 30 µm aufweisen, bevorzugt zwischen 0,3 µm und 20 µm.

Bei den in die Replizierschicht abgeformten Reliefstrukturen kann es sich um Reliefstrukturen handeln, die einzeln oder in Kombination und/oder als Überlagerung ausgewählt sind aus: diffraktives Gitter oder Subwellenlängengitter - hierbei insbesondere Lineargitter, Kreuzgitter, Hexagonalgitter, asymmetrische Gitterstruktur, symmetrische Gitterstruktur - Hologramm, Kinegram^{®}, Blazegitter, Binärgitter, mehrstufiges Phasengitter, retroreflektierende Struktur, binäre Freiformfläche, kontinuierliche Freiformfläche, diffraktive Makrostruktur, refraktive Makrostruktur, insbesondere eine Linsenstruktur oder Mikroprismenstruktur, Mikrospiegel- oder Mikrofacetten, Mikrolinse, Mikroprisma, Beugungsstruktur Nullter Ordnung, Mottenaugenstruktur, anisotrope Mattstruktur, isotrope Mattstruktur.

Auf die Replizierschicht kann nach einem Abformen des Oberflächenreliefs eine Reflexionsschicht aufgebracht werden. Die Reflexionsschicht kann eine Metallschicht bzw. eine Metallisierung sein. Die Metallschicht bzw. Metallisierung kann bevorzugt aus Aluminium, Chrom, Gold, Kupfer, Zinn, Silber, Indium, Gold, Zink oder einer Legierung solcher Metalle ausgebildet sein. Die Metallschicht bzw. die Metallisierung kann bevorzugt mittels Bedampfung hergestellt werden, insbesondere mittels Vakuumbedampfung. Die aufgedampfte Metallschicht bzw. Metallisierung kann vollflächig erfolgen und wahlweise vollflächig erhalten bleiben oder aber mit bekannten Demetallisierungsverfahren wie Ätzen, Lift-Off oder Photolithografie strukturiert werden und dadurch nur partiell vorliegen. Die Schichtdicke der Metallschicht kann insbesondere zwischen 10 nm und 500 nm liegen.

Die Metallschicht bzw. die Metallisierung kann alternativ auch aus einer gedruckten Schicht bestehen, insbesondere aus einer gedruckten Schicht aus Metallpigmenten in einem Bindemittel. Diese gedruckten Metallpigmente können vollflächig oder partiell aufgebracht sein und/oder in unterschiedlichen Flächenbereichen unterschiedliche Einfärbungen aufweisen. Die Schichtdicke der gedruckten Schicht kann insbesondere zwischen 1 µm und 3 µm liegen. Es ist alternativ möglich, die Reflexionsschicht aus einem Lack mit elektrisch leitfähigen, metallischen Pigmenten herzustellen, insbesondere aufzudrucken und/oder aufzugießen.

Ferner ist es alternativ möglich, dass die Reflexionsschicht von einer transparenten Reflexionsschicht gebildet wird, beispielsweise einer dünnen oder fein strukturierten metallischen Schicht oder einer HRI- oder LRI-Schicht (engl. High refraction index - HRI, low refraction index - LRI). Eine solche dielektrische Reflexionsschicht besteht beispielsweise aus einer aufgedampften Schicht aus Metalloxid, Metallsulfid, Titanoxid, etc. Die Schichtdicke einer solchen dielektrischen Reflexionsschicht kann bevorzugt zwischen 10 nm bis 500 nm liegen.

Alternativ oder zusätzlich zu den genannten Schichten kann das Patch noch eine oder mehrere weitere Schichten umfassen, die einen optisch variablen Effekt generieren, beispielsweise eine Volumenhologramm-Schicht, ein Dünnfilmschichtsystem, eine Schicht aus einem vernetzten cholesterischen Flüssigkristall-Material, eine Farbschicht, fluoreszierende Schichten, Sicherheitspigmente, magnetische Schichten oder photochrome Schichten.

Ferner kann das Patch eine Mikroperforation oder ein oder mehrere elektrisch leitfähige oder Halbleiter-Schichten umfassen, die eine elektrische Schaltung oder ein elektrisches Bauelement, realisieren. Dabei kann es sich beispielsweise um eine metallische Schicht handeln, die entweder aufgedampft oder aufgedruckt und anschließend durch galvanische Aufwachsung verstärkt wird.

Ferner kann das Patch ein oder mehrere Schichten aus einem magnetischen Material und/oder aus einem elektrolumineszenten Material und/oder einen QR-Code umfassen.

Das integrierte elektronische Bauelement kann insbesondere einen integrierten Schaltkreis und/oder eine Antenne umfassen. Der integrierte Schaltkreis und/oder die Antenne können ein flexibler Schaltkreis bzw. eine flexible Antenne sein. Eine Flexibilität des Schaltkreises kann insbesondere an eine Flexibilität des Sicherheitsdokuments, insbesondere eine Flexibilität des Substrats, angepasst sein. Eine Flexibilität der Antenne kann insbesondere an eine Flexibilität des Sicherheitsdokuments, insbesondere eine Flexibilität des Substrats, angepasst sein.

Gemäß einer Ausführungsform wird das integrierte elektronische Bauelement in die Kavität vor dem Aufbringen des Patches eingeführt. Dadurch wird der technische Vorteil erreicht, dass das Sicherheitsdokument durch einen Automaten zur Herstellung des Sicherheitsdokuments effizient hergestellt werden kann, beispielsweise in einer Fertigungslinie.

Gemäß einer Ausführungsform ist das integrierte elektronische Bauelement mit dem Substrat stoffschlüssig, insbesondere durch Klebung, verbunden. Dadurch wird der technische Vorteil erreicht, dass das integrierte elektronische Bauelement mit dem Substrat untrennbar verbunden ist und beispielsweise nicht mehr ohne erfassbare Schädigung des Substrats von dem Substrat entfernt werden kann.

Gemäß einer Ausführungsform wird das integrierte elektronische Bauelement zusammen mit dem Patch in die Kavität eingeführt. Dadurch wird der technische Vorteil erreicht, dass das elektronische Bauteil und das Patch als Vorprodukt bzw. Halbzeug separat vorgefertigt werden können, insbesondere mit erhöhter Register- oder Passergenauigkeit.

Gemäß einer Ausführungsform wird das integrierte elektronische Bauelement vor dem Einbringen in die Kavität mit dem Patch stoffschlüssig, insbesondere durch Klebung, verbunden. Dadurch wird der technische Vorteil erreicht, dass das integrierte elektronische Bauelement mit dem Patch untrennbar verbunden ist und beispielsweise nicht mehr ohne erfassbare Schädigung des Patches von dem Patch entfernt werden kann.

Gemäß einer Ausführungsform ist das integrierte elektronische Bauelement an dem Patch befestigt, insbesondere ausschließlich an dem Patch. Dadurch wird der technische Vorteil erreicht, dass das integrierte elektronische Bauelement beispielsweise nicht mehr ohne erfassbare Schädigung des Patches von dem Patch entfernt werden kann.

Gemäß einer Ausführungsform ist das integrierte elektronische Bauelement an dem Patch in die Kavität hineinhängend befestigt und von einem Boden der Kavität beabstandet. Dadurch wird der technische Vorteil erreicht, dass das elektronische Bauelement zu dem Boden der Kavität Bewegungsspielraum hat, beispielsweise bei einem Biegen des Substrats.

Gemäß einer Ausführungsform wird das automatische Einbringen des integrierten elektronischen Bauelements mittels eines Automaten, insbesondere mittels eines Industrieroboters, ausgeführt. Dadurch wird der technische Vorteil erreicht, dass das Sicherheitsdokument mit erhöhter Register- oder Passergenauigkeit hergestellt werden kann.

Gemäß einer Ausführungsform erfolgt die lagegenaue Positionierung des integrierten elektronischen Bauelements relativ zu der Kavität des Substrats basierend auf detektierbaren Markierungen, Passermarken oder Registermarken, welche auf dem integrierten elektronischen Bauelement und dem Substrat angebracht sind; und/oder erfolgt die lagegenaue Positionierung des Patches relativ zu der Kavität des Substrats basierend auf detektierbaren Markierungen, welche auf dem Patch und dem Substrat angebracht sind.

Dadurch wird der technische Vorteil erreicht, dass mit den detektierbaren Markierungen effizient eine lagegenaue Positionierung, insbesondere mittels sensorischer, vorzugsweise optisch detektierbarer Markierungen, Passermarken oder Registermarken, erfolgen kann.. Die detektierbaren Markierungen, Passermarken oder Registermarken können beispielsweise durch einen Automaten zur Herstellung des Sicherheitsdokuments erfasst werden, beispielsweise mittels eines optischen Sensors.

Gemäß einer Ausführungsform sind die detektierbaren Markierungen, Passermarken oder Registermarken sensorisch, insbesondere optisch, detektierbar und bilden spezielle separate Elemente, oder Bereich oder Schichten des Substrats und/oder sind selbst Teil des integrierten elektronischen Bauelements und/oder des Patches.

Dadurch wird der technische Vorteil erreicht, dass das Substrat und/oder das integrierte elektronische Bauelement und/oder das Patch effizient zueinander lagegenau positioniert werden können.

Gemäß einer Ausführungsform ist die Kavität eine partielle Kavität, welche nur an einer Oberseite des Substrats ausgeformt ist; oder ist die Kavität eine durchgängige Kavität, welche von der Oberseite des Substrats bis zu einer Unterseite des Substrats durchgängig, insbesondere als Durchbrechung des Substrats, ausgeformt ist. Durch eine partielle Kavität wird der technische Vorteil erreicht, dass das integrierte elektronische Bauelement effizient in das Sicherheitsdokument integriert werden kann, insbesondere so, dass keine Prozessschritte auf der Rückseite des Sicherheitsdokuments nötig sind.

Durch eine durchgängige Kavität wird der technische Vorteil erreicht, dass sich eine Flexibilität und/oder Stabilität des Sicherheitsdokuments im Bereich der Kavität erhöhen kann.

Gemäß einer Ausführungsform wird das Patch auf der Oberseite des Substrats aufgebracht und verschließt die Kavität mit dem eingebrachten integrierten elektronischen Bauelement an der Oberseite des Substrats. Dadurch wird der technische Vorteil erreicht, dass das eingebrachte integrierte elektronische Bauelement effizient vor Schmutz oder Beschädigung geschützt werden kann.

Gemäß einer Ausführungsform umfasst das Verfahren: Aufbringen einer Klebeschicht auf das integrierte elektronische Bauelement vor dem Einbringen des integrierten elektronischen Bauelements in die Kavität des Substrates. Dadurch wird der technische Vorteil erreicht, dass das elektronische Bauteil und die Klebeschicht als Vorprodukt bzw. Halbzeug separat vorgefertigt werden können, insbesondere mit einfachem Aufbringen der Klebeschicht.

Es ist vorteilhaft, für die Klebeschicht auf dem integrierten elektronischen Bauelement Materialien zu verwenden, welches einzeln oder in Kombination ausgewählt sind aus: Heißsiegelkleber, Pressure Sensitive Adhesive Kleber (PSA = Pressure Sensitive Adhesive), strahlungsaktivierbarer Kleber (UV-Kleber), thermisch aktivierbarer reaktiver Kleber, thermisch aktivierbarer nicht-reaktiver Kleber, Ein- oder Zwei-Komponentensysteme (Epoxysysteme und/oder beispielsweise Systeme mit Isocyanaten als Initiator für eine Polymerisation bzw. Vernetzung). Weiterhin ist es möglich, dass die Klebeschicht im Bereich eines integrierten Schaltkreises des integrierten elektronischen Bauelements ausgespart ist.

Die Klebeschicht kann eine Grundierung umfassen, die einzeln oder in Kombination ausgewählt ist aus: einschichtiger Kleber, mehrschichtiger Kleber, Kleber auf wässriger Basis, Kleber auf lösemittelhaltiger Basis, lösungsmittelfreier Kleber, strahlenhärtender Kleber, thermisch aktivierbarer Kleber, thermisch härtbarer Kleber oder aus Kombinationen daraus. Insbesondere kann die Kleberschicht oder können die Kleberschichten mittels eines Druckverfahrens und/oder mittels Gießens und/oder mittels Rakeln aufgebracht werden. Ferner ist es vorteilhaft, wenn die Kleberschicht oder die Kleberschichten zumindest teilweise, bevorzugt vollflächig, aufgebracht werden. Die Schichtdicke der einzelnen Kleberschichten innerhalb der Grundierung kann zwischen 0,01 µm und 8,00 µm liegen, bevorzugt zwischen 0,05 µm und 5,00 µm.

Gemäß einer Ausführungsform umfasst das Verfahren:
Verbinden des integrierten elektronischen Bauelements mittels der Klebeschicht mit dem Patch vor dem Einbringen des integrierten elektronischen Bauelements in die Kavität des Substrates und vor dem Aufbringen des Patches auf das Substrat.

Dadurch wird der technische Vorteil erreicht, dass das elektronische Bauteil und das Patch als Vorprodukt bzw. Halbzeug separat vorgefertigt werden können, insbesondere mit erhöhter Register- oder Passergenauigkeit.

Dabei ist es bevorzugt, wenn das Verbinden (auch als Prägen bezeichnet) bei einer Temperatur von 50°C bis 150°C, bevorzugt von 100°C bis 120°C, besonders bevorzugt von 100°C bis 180°C und/oder mit einem Prägedruck von 10 N/cm² bis 10000 N/cm², bevorzugt von 100 N/cm² bis 5000 N/cm² und/oder mit einer Prägezeit von 0,01s bis 2s, bevorzugt von 0,01s bis 1s, erfolgt.

Gemäß einer Ausführungsform ist die Kavität eine durchgängige Kavität und das Verfahren umfasst ferner: Bereitstellen eines zweiten Patches, wobei das zweite Patch eine Abmessung aufweist, die größer ist als die Abmessung der Kavität, so dass das zweite Patch unter lagegenauer Positionierung des zweiten Patches relativ zu der Kavität auf die Unterseite des Substrats aufbringbar ist und das der zweite Patch die Kavität an der Unterseite des Substrats abdeckt; und automatisches Aufbringen des zweiten Patches auf die Unterseite des Substrats und Abdecken der Kavität mit dem eingebrachten integrierten elektronischen Bauelement an der Unterseite des Substrats durch das zweite Patch unter lagegenauer Positionierung des zweiten Patches relativ zu der Kavität.

Dadurch wird der technische Vorteil erreicht, dass eine Verformung des Sicherheitsdokuments durch unterschiedliche Ausdehnung des Substrates bzw. Papiers und des Patches verringert werden kann. Das zweite Patch kann auf der dem (ersten) Patch gegenüberliegenden Seite des Substrats als Versiegelungsschicht geformt sein, die vorzugsweise eine ähnliche oder gleiche Flächenausdehnung wie das (erste) Patch aufweist und weitgehend mit dem Patch deckungsgleich angeordnet sein kann, sodass von dem (ersten) Patch und dem zweiten Patch das Substrat auf beiden Seiten gleichermaßen bedeckt ist.

Unter Abdecken oder Verschließen der Kavität durch das entsprechende größere Patch ist zu verstehen, dass das entsprechende Patch, insbesondere das Patch und/oder das zweite Patch in Normalenrichtung des Patches und des Substrats gesehen, als horizontale Abmessung umlaufend um die Kavität eine größere Abmessung als die Kavität aufweist. Durch die größere Abmessung wird eine Randzone des entsprechenden Patches gebildet, die eine Breite im Bereich von 1 mm bis 5 mm, bevorzugt im Bereich von 1,5 mm bis 3 mm aufweisen kann.

Die Dicke bzw. Stärke des zweiten Patches kann gleich der Dicke bzw. Stärke des (ersten) Patches sein oder dazu unterschiedlich sein. Die äußere Umrissform der Patches auf den gegenüberliegenden Seiten des Zielsubstrats kann dabei unterschiedlich sein. Das zweite Patch kann dabei durch einen Versiegelungs-Folienkörper oder durch eine Versiegelungs-Lackschicht gebildet sein. Das zweite Patch kann die Aussparung umgebende Bereiche des Substrats versiegeln, kann aber auch im Bereich der Aussparung vorgesehen sein. Beispielsweise kann das zweite Patch entweder vor dem Einbringen der Aussparung, d.h. der Kavität, beispielsweise durch Stanzen oder Schneiden, aufgebracht werden und beim Einbringen der Aussparung mit dem Substrat gemeinsam durchtrennt und entfernt werden. Alternativ kann das zweite Patch nach dem Einbringen der Aussparung bzw. Kavität aufgebracht werden, sodass das zweite Patch auch die freie Rückseite des Patches im Bereich der Aussparung bedeckt. Das zweite Patch kann dabei insbesondere die senkrechten Schnittkanten der Aussparung bzw. Kavität ebenfalls versiegeln, um auch dort das Eindringen von Feuchtigkeit zu verhindern.

Das zweite Patch kann ebenso wie das erste Patch Sicherheitselemente aufweisen, die sich mit Sicherheitselementen des Patches überlagern können, sodass mehrere Sicherheitselemente in Kombination insbesondere optische Effekte erzeugen können. Ferner ist es auch möglich, durch die Gestaltung der Umrissform des zweiten Patches ein weiteres Sicherheitsmerkmal bereitzustellen. Beispielsweise kann die Umrissform filigrane und/oder kleinteilige Motive aufweisen. Die Umrissform des zweiten Patches kann dabei ähnlich der Umrissform der Aussparung oder davon verschieden sein.

Gemäß einer Ausführungsform ist die Klebeschicht eine einseitige Klebeschicht, die eine Oberseite oder eine Unterseite des integrierten elektronischen Bauelements mit dem Patch oder dem zweiten Patch verbindet; oder die Klebeschicht ist eine zweiseitige Klebeschicht, die die Oberseite des integrierten elektronischen Bauelements mit dem Patch und die Unterseite des integrierten elektronischen Bauelements mit dem zweiten Patch verbindet.

Durch eine einseitige Klebeschicht wird der technische Vorteil erreicht, dass das elektronische Bauelement sich mit wenig Materialeinsatz in das Sicherheitsdokument integrieren lässt.

Durch eine zweiseitige Klebeschicht wird der technische Vorteil erreicht, dass das elektronische Bauelement sich mit stoffschlüssiger Verbindung sowohl zu dem Patch als auch zu dem zweiten Patch in das Sicherheitsdokument integrieren lässt, wodurch sich Manipulationen an dem elektronischen Bauelement besonders einfach erfassen lassen.

Die zweiseitige Klebeschicht kann eine erste und eine zweite Klebeschicht umfassen. Bevorzugt werden für die erste und zweite Klebeschicht unterschiedlich aktivierbare Klebstoffe verwendet. Hierbei ist es vorteilhaft, wenn die zweite Klebeschicht bei einem ersten Prägevorgang nicht aktiviert wird. Nach dem ersten Prägevorgang kann die zweite Klebeschicht also bevorzugt keine Klebrigkeit aufweisen.

Es können auch variierende Flächenbelegungen der Klebeschichten (zum Beispiel in einem Teilbereich unterschiedliche Flächenbelegungen im Innen- oder Außenbereich) zum Einsatz kommen. Ferner ist es möglich, die zweite Klebeschicht in einem Raster, insbesondere einem Linienraster oder Punktraster mit einer Rasterdichte von 40 bis 80 Linien pro cm aufzubringen. Besonders bevorzugt ist es, wenn die zweite Klebeschicht aus einem thermoplastischen Klebstoff mit einer Glasübergangstemperatur von 80°C bis 300°C, bevorzugt von 100°C bis 240°C, besonders bevorzugt von 100°C bis 180°C gebildet wird. Die erste und/oder zweite Klebeschicht kann mehrschichtig aufgebaut sein. Die Klebeschichten können mit einem Flächengewicht von 0,1 g/m² bis 50 g/m², bevorzugt von 1 g/m² bis 30 g/m² aufgetragen werden.

Gemäß einer Ausführungsform ist die Kavität eine partielle Kavität; und die Klebeschicht ist eine einseitige Klebeschicht, die eine Oberseite des integrierten elektronischen Bauelements mit dem Patch oder eine Unterseite des integrierten elektronischen Bauelements mit dem Substrat verbindet; oder die Klebeschicht ist eine zweiseitige Klebeschicht, die die Oberseite des integrierten elektronischen Bauelements mit dem Patch und die Unterseite des integrierten elektronischen Bauelements mit dem Substrat verbindet.

Durch eine einseitige Klebeschicht wird der technische Vorteil erreicht, dass das elektronische Bauelement sich mit wenig Materialeinsatz in das Sicherheitsdokument integrieren lässt.

Durch eine zweiseitige Klebeschicht wird der technische Vorteil erreicht, dass das elektronische Bauelement sich mit stoffschlüssiger Verbindung sowohl zu dem Patch als auch zu dem Substrat in das Sicherheitsdokument integrieren lässt, wodurch sich Manipulationen an dem elektronischen Bauelement besonders einfach erfassen lassen.

Gemäß einer Ausführungsform umfasst das Substrat einen Mehrschichtkörper, der aus zwei oder mehreren übereinanderliegenden Schichten aufgebaut ist, insbesondere aus zwei äußeren Baumwollschichten, die eine innere Polymerschicht umschließen; und die Kavität ist in zumindest einer Schicht des Mehrschichtkörpers ausgeformt. Dadurch wird der technische Vorteil erreicht, dass die Kavität effizient in dem Mehrschichtkörper gebildet sein kann.

Bei der inneren Polymerschicht kann es sich um ein thermoplastisches polymeres Material handeln. Die innere Polymerschicht kann eine Dicke im Bereich von 5 µm bis 500 µm aufweisen, bevorzugt von 20 µm bis 50 µm. Die innere Polymerschicht kann ein polymeres Material umfassen, das ein amorphes oder vollamorphes Polyamid, Polypropylen oder Polyethylen umfasst. Bei einem Landqart-Substrat wie Durasafe^{®} kann es sich um Polyamid 12 auf der Basis aliphatischer und cycloaliphatischer Bausteine handeln, insbesondere mit aromatischen Anteilen.

Papierlagen oder die Baumwollschichten des Mehrschichtkörpers können ein Flächengewicht im Bereich von 50 bis 500 g/m² aufweisen, bevorzugt im Bereich von 80 g/m² bis 150 g/m².

Gemäß einer Ausführungsform umfasst das integrierte elektronische Bauelement einen integrierten Schaltkreis und eine NFC-Antenne (NFC = "Near Field Communication"), wobei der integrierte Schaltkreis ausgebildet ist, über die NFC-Antenne mit einem externen Terminal zu interagieren und Daten von dem externen Terminal zu empfangen und/oder Daten an das externe Terminal zu senden; wobei der integrierte Schaltkreis ausgebildet ist, die zu sendenden Daten vor dem Senden kryptografisch zu verschlüsseln und die empfangenen Daten kryptografisch zu entschlüsseln; wobei der integrierte Schaltkreis insbesondere ausgebildet ist, zumindest eine der Funktionen Tracking, Verifizierung oder Bezahlung auszuführen. Es kann sich auch um eine Signaturfunktion im Sinne einer asymmetrischen Kryptographie handeln.

Dadurch wird der technische Vorteil erreicht, dass sich das elektronische Bauteil für eine sichere Kommunikation in sicherheitskritischen Bereichen eignet, wie beispielsweise dem elektronischen Zahlungsverkehr.

Gemäß einer Ausführungsform umfasst das Substrat und das Patch jeweils ein Sicherheitsmerkmal, die zusammenwirken und einen sich überlagernden optischen Effekt generieren. Dadurch wird der technische Vorteil erreicht, dass sich eine Manipulation an dem Patch effizient erfassen lässt.

Gemäß einer Ausführungsform umfasst das integrierte elektronische Bauelement ein Sicherheitsmerkmal, das mit den Sicherheitsmerkmalen des Substrats und des Patches zusammenwirkt und darauf basierend ein verknüpftes Sicherheitsmerkmal bereitstellt.

Dadurch wird der technische Vorteil erreicht, dass sich eine Manipulation an dem elektronischen Bauteil effizient erfassen lässt.

Gemäß einem zweiten Aspekt wird die erfindungsgemäße Aufgabe gelöst durch ein Sicherheitsdokument, mit: einem Substrat mit einer Kavität; einem integrierten elektronischen Bauelement; und einem Patch; wobei die Kavität eine Innenkontur aufweist, die an eine Außenkontur des integrierten elektronischen Bauelements angepasst ist, wobei das integrierte elektronische Bauelement unter lagegenauer Positionierung des integrierten elektronischen Bauelements relativ zu der Kavität in die Kavität des Substrates eingebracht ist; wobei das Patch eine Abmessung aufweist, die größer ist als die Abmessung der Kavität, wobei das Patch unter lagegenauer Positionierung des Patches relativ zu der Kavität auf dem Substrat aufgebracht ist und die Kavität abdeckt, insbesondere verschließt.

Dadurch wird der technische Vorteil erreicht, dass sich das Sicherheitsdokument mit erhöhter Register- oder Passergenauigkeit herstellen lässt. Wie bereits oben beschrieben ist unter Register- oder Passergenauigkeit eine Lagegenauigkeit zweier oder mehrerer Elemente und/oder Schichten relativ zueinander zu verstehen. Dabei kann sich die Register- oder Passergenauigkeit des Sicherheitsdokuments innerhalb eines vorgegebenen Toleranzbereichs bewegen, der möglichst gering sein kann. Die Registergenauigkeit von mehreren Elementen und/oder Schichten zueinander kann die Prozesssicherheit erhöhen. Ferner kann beispielsweise die lagegenaue Positionierung, insbesondere bei zumindest teilweise transparentem Patch, als Sicherheitsmerkmal des Sicherheitsdokuments zur Überprüfung der Echtheit des Sicherheitsdokuments erfasst werden.

Gemäß einer Ausführungsform ist die Kavität eine partielle Kavität, welche nur an einer Oberseite des Substrats ausgeformt ist; oder die Kavität ist eine durchgängige Kavität, welche von der Oberseite des Substrats bis zu einer Unterseite des Substrats durchgängig, insbesondere als Durchbrechung des Substrats, ausgeformt ist.

Durch eine partielle Kavität wird der technische Vorteil erreicht, dass das integrierte elektronische Bauelement effizient in das Sicherheitsdokument integriert werden kann, insbesondere so, dass keine Prozessschritte auf der Rückseite des Sicherheitsdokuments nötig sind.

Durch eine durchgängige Kavität wird der technische Vorteil erreicht, dass sich eine Flexibilität und/oder Stabilität des Sicherheitsdokuments im Bereich der Kavität erhöhen kann.

Gemäß einer Ausführungsform umfasst das integrierte elektronische Bauelement einen integrierten Schaltkreis und eine NFC-Antenne, wobei der integrierte Schaltkreis ausgebildet ist, über die NFC-Antenne mit einem externen Terminal zu interagieren und Daten von dem externen Terminal zu empfangen und/oder Daten an das externe Terminal zu senden; wobei der integrierte Schaltkreis ausgebildet ist, die zu sendenden Daten kryptografisch zu verschlüsseln und die empfangenen Daten kryptografisch zu entschlüsseln; wobei der integrierte Schaltkreis insbesondere ausgebildet ist, zumindest eine der Funktionen Tracking, Verifizierung oder Bezahlung auszuführen.

Dadurch wird der technische Vorteil erreicht, dass sich das elektronische Bauteil für eine sichere Kommunikation in sicherheitskritischen Bereichen eignet, wie beispielsweise dem elektronischen Zahlungsverkehr.

Vorstehend und nachstehend beschriebene Ausführungsformen des Verfahrens gemäß dem ersten Aspekt sind ebenfalls Ausführungsformen des Sicherheitsdokuments gemäß dem zweiten Aspekt.

Vorstehend und nachstehend beschriebene Ausführungsformen des Sicherheitsdokuments gemäß dem zweiten Aspekt sind ebenfalls Ausführungsformen des Verfahrens gemäß dem ersten Aspekt.

Weitere Ausführungsbeispiele werden Bezug nehmend auf die beiliegenden Zeichnungen näher erläutert. Es zeigen:
- Fig. 1: ein schematisches Diagramm eines Verfahrens zum automatisierten Herstellen eines Sicherheitsdokuments gemäß einer Ausführungsform;
- Fig. 2a-d: schematische Schnittdarstellungen von Sicherheitsdokumenten mit einer durchgängigen Kavität gemäß Ausführungsformen; und
- Fig. 3a-d: schematische Schnittdarstellungen von Sicherheitsdokumenten mit einer partiellen Kavität gemäß Ausführungsformen.

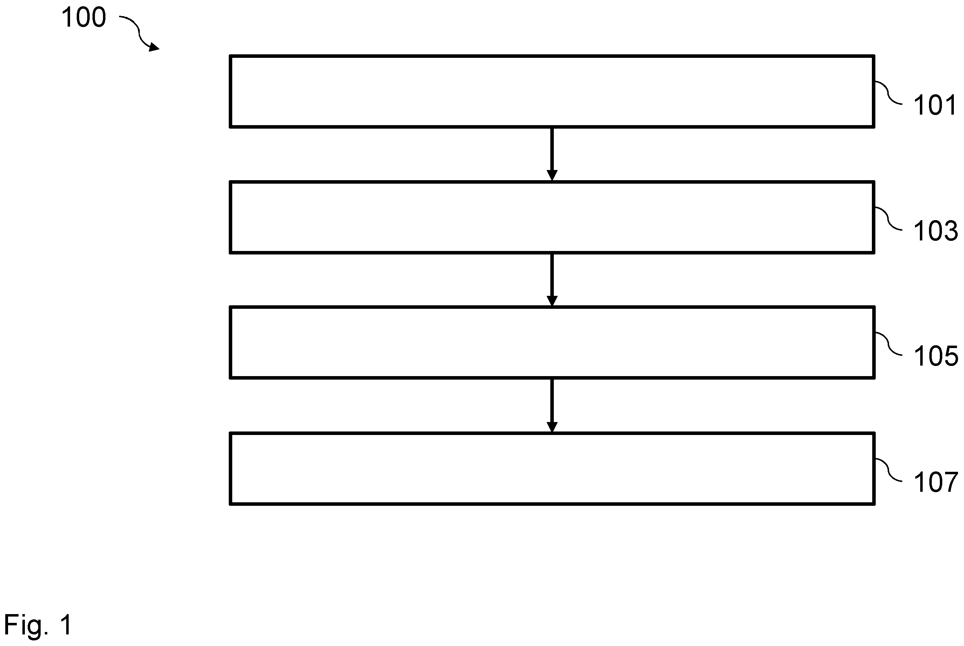

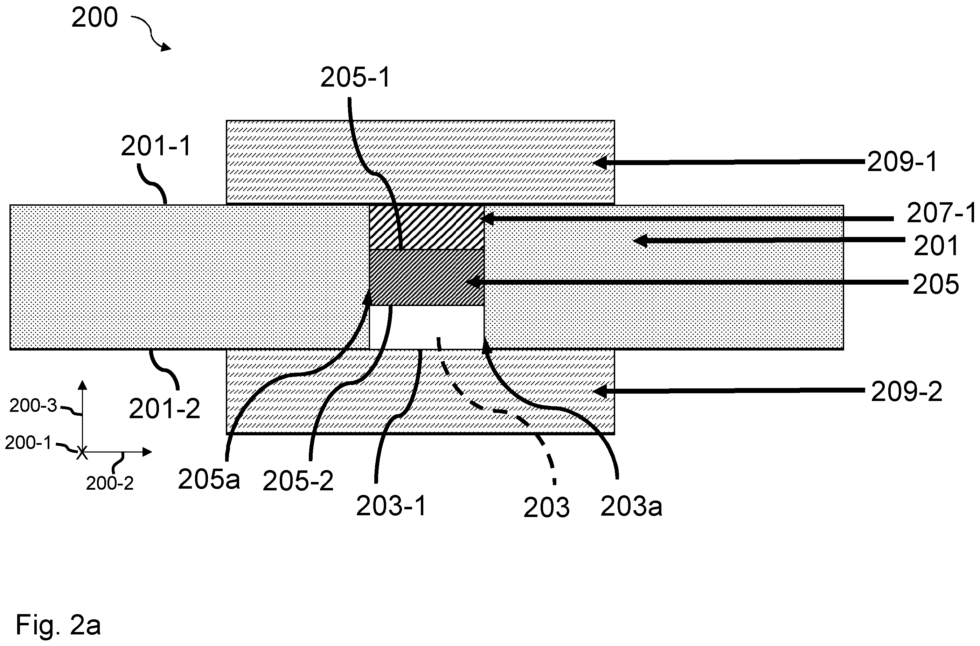

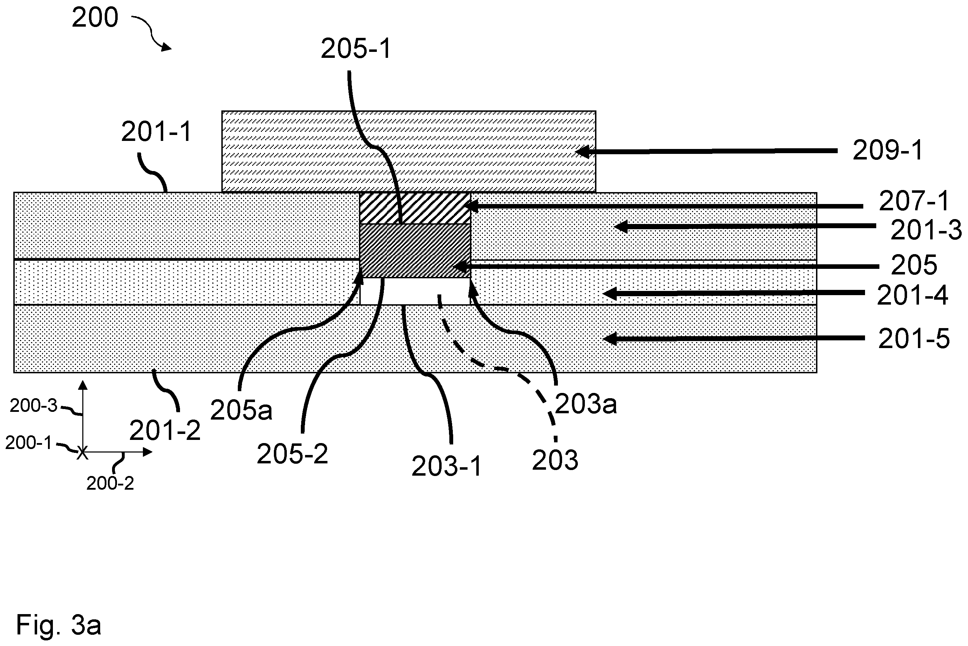

Fig. 1 zeigt ein schematisches Diagramm eines Verfahrens 100 zum automatisierten Herstellen eines in der Fig.1 nicht dargestellten Sicherheitsdokuments 200. Wie in den folgenden Figuren 2a-d und 3a-d dargestellt, umfasst das Sicherheitsdokument 200 ein Substrat 201 mit einer Kavität 203, ein integriertes elektronisches Bauelement 205 und zumindest einen Patch 209-1.

Das Verfahren 100 umfasst ein Bereitstellen 101 des Substrates 201 mit der Kavität 203, wobei die Kavität 203 eine Innenkontur 203a aufweist, die an eine Außenkontur 205a des integrierten elektronischen Bauelements 205 angepasst ist, so dass das integrierte elektronische Bauelement 205 unter lagegenauer Positionierung des integrierten elektronischen Bauelements 205 relativ zu der Kavität 203 in die Kavität 203 des Substrates 201 einbringbar ist.

Wie in der Fig. 2a dargestellt, kann die Innenkontur 203a der Kavität 203 senkrecht zu einer Oberseite 201-1 des Substrats 201 und einer Unterseite 201-2 des Substrats 201 angeordnet sein. Die Innenkontur 203a der Kavität 203 kann sich entlang einer vertikalen Richtung bzw. der Hochrichtung bzw. der Normalenrichtung 200-3 des Sicherheitsdokuments 200 erstrecken. Wie in der Fig. 2a dargestellt, kann die Kavität 203 quaderförmig sein. Die Innenkontur 203a der Kavität 203 kann die Oberfläche der Kavität 203 definieren, welche parallel zu einer Oberfläche des elektronischen Bauelements 205 sein kann, die durch die Außenkontur 205a des integrierten elektronischen Bauelements 205 definiert sein kann.

Das Verfahren 100 umfasst ein Bereitstellen 103 des Patches 209-1, wobei das Patch 209-1 eine Abmessung aufweist, die größer ist als eine Abmessung der Kavität 203, so dass das Patch 209-1 unter lagegenauer Positionierung des Patches 209-1 relativ zu der Kavität 203 auf dem Substrat 201 aufbringbar ist und die Kavität 203 abdeckt. Unter Abmessungen ist hier eine horizontale Abmessung des Patches 209-1 bzw. der Kavität 203 in einer Längsrichtung 200-1 und einer Querrichtung 200-2 des Sicherheitsdokuments 200 zu verstehen entsprechend der Darstellung in Fig. 2a.

Unter Abdecken oder Verschließen der Kavität 203 durch das entsprechende größere Patch 209-1, 209-2 ist zu verstehen, dass das entsprechende Patch 209-1, 209-2, insbesondere das Patch 209-1 und/oder das zweite Patch 209-2, in Normalenrichtung bzw. Hochrichtung 200-3 des Patches 209-1, 209-2 und des Substrats 201 bzw. des Sicherheitsdokuments 200 gesehen, als horizontale Abmessung umlaufend um die Kavität 203 eine größere Abmessung als die Kavität 203 aufweisen kann. Durch die größere Abmessung kann eine Randzone des entsprechenden Patches 209-1, 209-2 gebildet werden, die eine Breite im Bereich von 1 mm bis 5 mm, bevorzugt im Bereich von 1,5 mm bis 3 mm aufweist.

Die lagegenaue Positionierung des Patches 209-1 relativ zu der Kavität 203 des Substrats 201 kann basierend auf ersten detektierbaren Markierungen erfolgen, welche auf dem Patch 209-1 und dem Substrat 201 angebracht sind. Beispielsweise kann zumindest ein Sensor eines Automaten zur Herstellung des Sicherheitsdokuments 200 ausgebildet sein, die ersten detektierbaren Markierungen zu erfassen.

Das Verfahren 100 umfasst ferner ein automatisches Einbringen 105 des integrierten elektronischen Bauelements 205 in die Kavität 203 des Substrates 201 unter lagegenauer Positionierung des integrierten elektronischen Bauelements 205 relativ zu der Kavität 203, welches mittels des Automaten, insbesondere mittels eines Industrieroboters, ausgeführt werden kann. Das automatische Einbringen 105 kann insbesondere entlang einer vertikalen Richtung bzw. Hochrichtung bzw. Normalenrichtung 200-3 des Sicherheitsdokuments 200 entsprechend der Darstellung in Fig. 2a erfolgen. Das elektronische Bauelement 205 kann in vertikaler Richtung bzw. Hochrichtung bzw. Normalenrichtung 200-3 des Sicherheitsdokuments 200 unter lagegenauer Positionierung bezüglich der horizontalen Koordinaten von Bauelement 205 und Kavität 203, d.h. einer Positionierung bezüglich der Längsrichtung 200-1 und Querrichtung 200-2 des Sicherheitsdokuments 200, in die Kavität 203 eingebracht werden, entsprechend der Darstellung in Fig. 2a.

Die lagegenaue Positionierung des integrierten elektronischen Bauelements 205 relativ zu der Kavität 203 des Substrats 201 kann basierend auf zweiten detektierbaren Markierungen erfolgen, welche auf dem integrierten elektronischen Bauelement 205 und dem Substrat 201, beispielsweise auf deren Oberflächen, angebracht sind. Beispielsweise kann der zumindest eine Sensor des Automaten zur Herstellung des Sicherheitsdokuments 200 ausgebildet sein, die zweiten detektierbaren Markierungen zu erfassen.

Das Verfahren 100 umfasst ferner ein automatisches Aufbringen 107 des Patches 209-1 auf dem Substrat 201 und Abdecken, insbesondere Verschließen, der Kavität 203 mit dem eingebrachten integrierten elektronischen Bauelement 205 durch das Patch 209-1 unter lagegenauer Positionierung des Patches 209-1 relativ zu der Kavität 203 des Substrates 201.

Das Patch kann in vertikaler Richtung, d.h. entlang der Hochrichtung bzw. Normalenrichtung 200-3 des Sicherheitsdokuments 200, unter lagegenauer Positionierung bezüglich der horizontalen Koordinaten, d.h. einer Positionierung bezüglich der Längsrichtung 200-1 und Querrichtung 200-2 des Sicherheitsdokuments 200, von Patch 209-1 und Kavität 203 oder Patch 209-1 und Substrat 201 auf dem Substrat 201 aufgebracht werden, entsprechend der Darstellung in Fig. 2a.

Das automatische Aufbringen 107 des Patches 209-1 auf das Substrat 201 und die dabei erzielbare Registergenauigkeit kann in horizontaler Längsrichtung 200-1 in einem Intervall im Bereich von -1,0 mm bis 1,0 mm erfolgen, bevorzugt von -0,5 mm bis 0,5 mm. Alternativ oder zusätzlich kann die erzielbare Registergenauigkeit in horizontaler Querrichtung 200-2 im Bereich von -0,5 mm bis 0,5 mm erfolgen, bevorzugt von -0,3 mm bis 0,3 mm, besonders bevorzugt von -0,2 mm bis 0,2 mm. Die Kavität 203 kann entsprechend größer ausgeführt sein, um das integrierte elektronische Bauelement 205 sicher in die Kavität 203 einzubringen. Die Kavität 203 kann insbesondere in horizontaler Längsrichtung 200-1 um 2,0 mm, bevorzugt um 1,0 mm und/oder insbesondere in horizontaler Querrichtung 200-2 um 1,0 mm, bevorzugt um 0,6 mm und besonders bevorzugt um 0,4 mm größer als das integrierte elektronische Bauelement 205 ausgebildet bzw. ausgeführt sein.

Fig. 2a zeigt ein Sicherheitsdokument 200 gemäß einer Ausführungsform mit einer durchgängigen Kavität 203 in einer Schnittdarstellung durch die verschiedenen Schichten des Sicherheitsdokuments 200. Die Längsrichtung 200-1 des Sicherheitsdokuments 200, die Querrichtung 200-2 des Sicherheitsdokuments 200, und die Hochrichtung bzw. Normalenrichtung 200-3 des Sicherheitsdokuments 200 sind in der Figur 2a schematisch dargestellt.

Wie bereits zur Fig. 1 beschrieben, umfasst das Sicherheitsdokument 200 ein Substrat 201 mit der Kavität 203, ein integriertes elektronisches Bauelement 205 und einen Patch 209-1.

Die Kavität 203 weist eine Innenkontur 203a auf, die an eine Außenkontur 205a des integrierten elektronischen Bauelements 205 angepasst ist. Wie in der Fig. 2a dargestellt, kann die Kavität 203 eine durchgängige Kavität sein, welche von einer Oberseite 201-1 des Substrats 201 bis zu einer Unterseite 201-2 des Substrats 201 durchgängig ausgeformt ist.

Das integrierte elektronische Bauelement 205 ist unter lagegenauer Positionierung des integrierten elektronischen Bauelements 205 relativ zu der Kavität 203 in die Kavität 203 des Substrates 201 eingebracht. Wie in der Fig. 2a dargestellt, kann das integrierte elektronische Bauelement 205 an dem Patch 209-1 in die Kavität 203 hineinhängend befestigt sein und von einem Boden 203-1 der Kavität 203 beabstandet sein.

Vor dem Einbringen des integrierten elektronischen Bauelements 205 in die Kavität 203 des Substrates 201 kann vorgesehen sein, eine Klebeschicht 207-1 auf das integrierte elektronische Bauelement 205 aufzubringen und das integrierte elektronische Bauelement 205 mittels der Klebeschicht 207-1 mit dem Patch 209-1 zu verbinden. Wie in der Fig. 2a dargestellt, kann die Klebeschicht 207-1 eine einseitige Klebeschicht sein, die eine Oberseite 205-1 des integrierten elektronischen Bauelements 205 mit dem Patch 209-1 verbindet. Insofern kann das integrierte elektronische Bauelement 205 zusammen mit dem Patch 209-1 in die Kavität 203 eingeführt werden. Alternativ kann das integrierte elektronische Bauelement 205 in die Kavität 203 vor dem Aufbringen des Patches 209-1 eingeführt werden.

Das Patch 209-1 weist eine Abmessung auf, die größer ist als die Abmessung der Kavität 203. Unter Abmessung ist hier jeweils eine horizontale Abmessung in der Längsrichtung 200-1 und der Querrichtung 200-2 des Sicherheitsdokuments 200 zu verstehen, d.h. eine Abmessung in die Zeichenebene hinein.

Das Patch 209-1 ist unter lagegenauer Positionierung des Patches 209-1 relativ zu der Kavität 203 auf dem Substrat 201 aufgebracht und deckt die Kavität 203 ab. Unter Abdecken kann hier ein Verschließen der Kavität 203 verstanden werden, so dass ein Schutz des in der Kavität eingebrachten Bauelements 205 vor Umgebungseinflüssen erreicht werden kann. Wie in der Fig. 2a dargestellt, kann das Patch 209-1 auf der Oberseite 201-1 des Substrats 201 aufgebracht werden, und die Kavität 203 mit dem eingebrachten integrierten elektronischen Bauelement 205 an der Oberseite 201-1 des Substrats 201 verschließen. Das Substrat 201 und das Patch 209-1 können jeweils ein Sicherheitsmerkmal umfassen, die zusammenwirken und einen sich überlagernden optischen Effekt generieren.

Wie ferner in der Fig. 2a dargestellt ist, kann vorgesehen sein, ein zweites Patch 209-2 bereitzustellen. Das zweite Patch 209-2 kann eine Abmessung aufweisen, die größer als die Abmessung der Kavität 203 ist, so dass das zweite Patch 209-2 unter lagegenauer Positionierung des zweiten Patches 209-2 relativ zu der Kavität 203 auf die Unterseite 201-2 des Substrats 201 aufbringbar ist und die Kavität 203 an der Unterseite 201-2 des Substrats 201 abdeckt. Die Unterseite 201-2 und die Oberseite 201-1 erstrecken sich jeweils in horizontaler Richtung, d.h. in Längsrichtung 200-1 und in Querrichtung 200-2 des Sicherheitsdokuments 200, wie in Fig. 2a dargestellt. Das zweite Patch 209-2 kann in vertikaler Richtung, d.h. in Hochrichtung bzw. Normalenrichtung 200-3 des Sicherheitsdokuments 200 auf die Unterseite 201-2 des Substrats 201 aufgebracht werden.

Die lagegenaue Positionierung des zweiten Patches 209-2 relativ zu der Kavität 203 des Substrats 201 kann basierend auf dritten detektierbaren Markierungen erfolgen, welche auf dem zweiten Patch 209-2 und dem Substrat 201 angebracht sind. Beispielsweise kann der zumindest eine Sensor des Automaten zur Herstellung des Sicherheitsdokuments 200 ausgebildet sein, die dritten detektierbaren Markierungen zu erfassen. Das zweite Patch 209-2 kann den Boden 203-1 der Kavität 203 bilden.

Ferner kann vorgesehen sein, das zweite Patch 209-2 auf die Unterseite 201-2 des Substrats 201 automatisch aufzubringen und die Kavität 203 mit dem eingebrachten integrierten elektronischen Bauelement 205 an der Unterseite 201-2 des Substrats 201 durch das zweite Patch 209-2 unter lagegenauer Positionierung des zweiten Patches 209-2 relativ zu der Kavität 203 abzudecken. Das Substrat 201 und das zweite Patch 209-2 können jeweils ein weiteres Sicherheitsmerkmal umfassen, die zusammenwirken und einen sich überlagernden optischen Effekt generieren.

Das integrierte elektronische Bauelement 205 kann ferner auch ein Sicherheitsmerkmal umfassen, das mit den Sicherheitsmerkmalen des Substrats 201 und des Patch 209-1 zusammenwirkt und darauf basierend ein verknüpftes Sicherheitsmerkmal bereitstellt. Alternativ oder zusätzlich kann das integrierte elektronische Bauelement 205 ferner auch ein weiteres Sicherheitsmerkmal umfassen, das mit den weiteren Sicherheitsmerkmalen des Substrats 201 und des zweiten Patches 209-2 zusammenwirkt und darauf basierend ein weiteres verknüpftes Sicherheitsmerkmal bereitstellt.

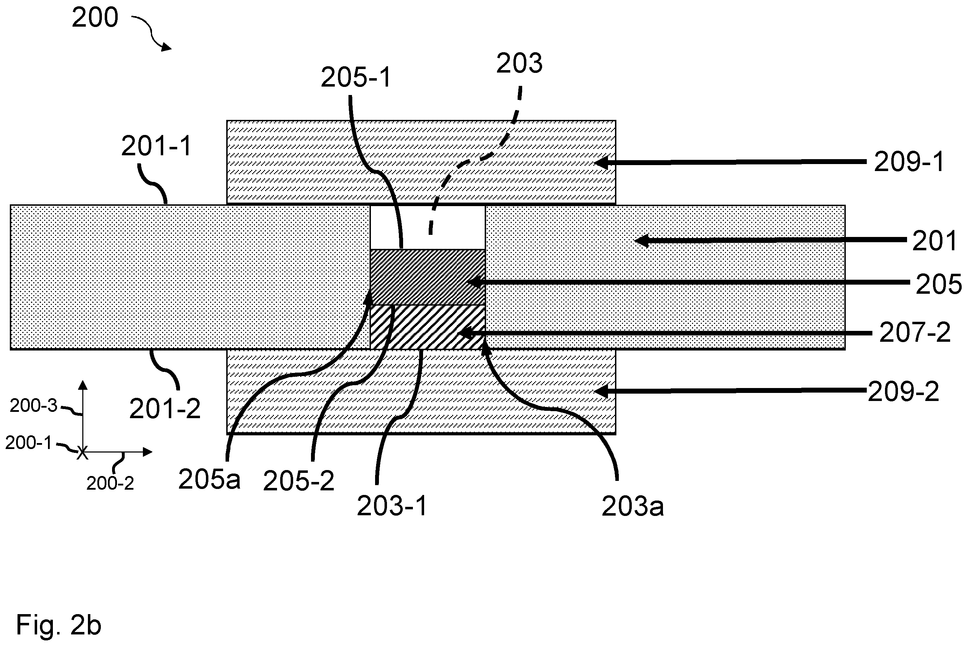

Fig. 2b zeigt ein Sicherheitsdokument 200 gemäß einer Ausführungsform mit einer durchgängigen Kavität 203 in einer Schnittdarstellung durch die verschiedenen Schichten des Sicherheitsdokuments 200. Im Folgenden werden zwecks Vermeidung von Wiederholungen Unterschiede des in der Fig. 2b dargestellten Sicherheitsdokuments 200 zu dem in der Fig. 2a dargestellten Sicherheitsdokument 200 beschrieben.

Wie in Fig. 2b dargestellt, kann die Klebeschicht 207-2 eine einseitige Klebeschicht sein, die eine Unterseite 205-2 des integrierten elektronischen Bauelements 205 mit dem zweiten Patch 209-2 verbindet. Zwischen dem Patch 209-1 und dem elektronischen Bauelement 205 kann in Hochrichtung bzw. Normalenrichtung 200-3 des Sicherheitsdokuments 200 ein Zwischenraum definiert sein, der Teil der Kavität 203 sein kann.

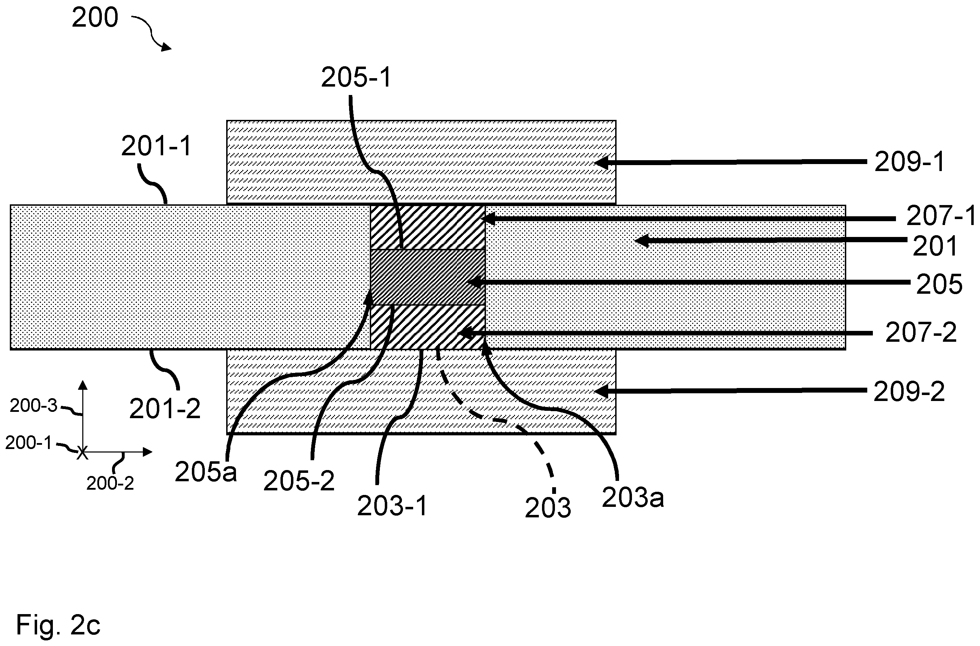

Fig. 2c zeigt ein Sicherheitsdokument 200 gemäß einer Ausführungsform mit einer durchgängigen Kavität 203 in einer Schnittdarstellung durch die verschiedenen Schichten des Sicherheitsdokuments 200. Im Folgenden werden zwecks Vermeidung von Wiederholungen Unterschiede des in der Fig. 2c dargestellten Sicherheitsdokuments 200 zu dem in der Fig. 2a dargestellten Sicherheitsdokument 200 beschrieben.

Wie in Fig. 2c dargestellt, kann die Klebeschicht 207-1, 207-2 eine zweiseitige Klebeschicht sein, die die Oberseite 205-1 des integrierten elektronischen Bauelements 205 mit dem Patch 209-1 und die Unterseite 205-2 des integrierten elektronischen Bauelements 205 mit dem zweiten Patch 209-2 verbindet.

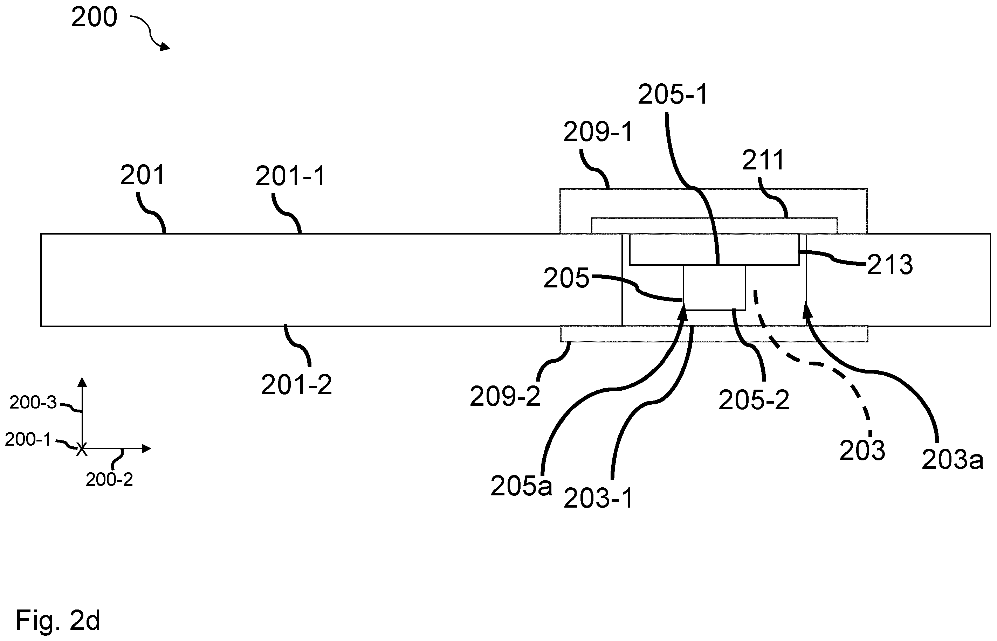

Fig. 2d zeigt ein Sicherheitsdokument 200 gemäß einer Ausführungsform mit einer durchgängigen Kavität 203 in einer Schnittdarstellung durch die verschiedenen Schichten des Sicherheitsdokuments 200. Im Folgenden werden zwecks Vermeidung von Wiederholungen Unterschiede des in der Fig. 2d dargestellten Sicherheitsdokuments 200 zu dem in der Fig. 2a dargestellten Sicherheitsdokument 200 beschrieben.

Wie in der Fig. 2d dargestellt, kann das Substrat 201 aus einer Schicht, insbesondere Baumwollschicht bestehen, durch die sich die Kavität 203 erstreckt. Das zweite Patch 209-2 kann anders als das Patch 209-1 ausgebildet sein, insbesondere kann das zweite Patch 209-2 eine Folie, wie beispielsweise eine Schutzfolie sein.

Wie ferner in Figur 2d dargestellt, kann das Patch 209-1 einen Träger 211 umfassen, welcher über einer Antenne 213, insbesondere NFC-Antenne, des integrierten elektronischen Bauelements 205 angeordnet ist.

Das integrierte elektronische Bauelement 205 kann einen integrierten Schaltkreis umfassen, welcher ausgebildet ist, über die Antenne 213 mit einem externen Terminal zu interagieren und Daten von dem externen Terminal zu empfangen und/oder Daten an das externe Terminal zu senden. Der integrierte Schaltkreis kann ferner ausgebildet sein, die zu sendenden Daten vor dem Senden kryptografisch zu verschlüsseln und die empfangenen Daten kryptografisch zu entschlüsseln. Der integrierte Schaltkreis kann insbesondere ausgebildet sein, zumindest eine der Funktionen Tracking, Verifizierung oder Bezahlung auszuführen.

Fig. 3a zeigt ein Sicherheitsdokument 200 gemäß einer Ausführungsform mit einer partiellen Kavität 203 in einer Schnittdarstellung durch die verschiedenen Schichten des Sicherheitsdokuments 200.

Wie bereits zu den Fig. 1 und 2a beschrieben, umfasst das Sicherheitsdokument 200 ein Substrat 201 mit der Kavität 203, ein integriertes elektronisches Bauelement 205 und einen Patch 209-1. Im Folgenden werden zwecks Vermeidung von Wiederholungen Unterschiede des in der Fig. 3a dargestellten Sicherheitsdokuments 200 zu dem in der Fig. 2a dargestellten Sicherheitsdokument 200 beschrieben.

Wie in der Fig. 3a dargestellt, kann das Substrat 201 einen Mehrschichtkörper umfassen, der aus zwei oder mehreren übereinanderliegenden Schichten aufgebaut ist. In der Figur 3a sind beispielhaft drei Schichten 201-3, 201-4, 201-5 dargestellt. Die äußeren Schichten 201-3, 201-5 können insbesondere Baumwollschichten sein, welche eine insbesondere als Polymerschicht ausgebildete innere Schicht 201-4 umschließen. Wie in der Fig. 3a dargestellt, kann die Kavität 203 in zumindest einer Schicht des Mehrschichtkörpers ausgeformt sein, insbesondere wie hier dargestellt in der Baumwollschicht 201-3 und der Polymerschicht 201-4. Die dritte Schicht 201-5 kann den Boden 203-1 der Kavität 203 bilden, d.h. die Kavität 203 begrenzen.

Wie ferner in der Fig. 3a dargestellt, kann die Klebeschicht 207-1 eine einseitige Klebeschicht sein, die eine Oberseite 205-1 des integrierten elektronischen Bauelements 205 mit dem Patch 209-1 verbindet.

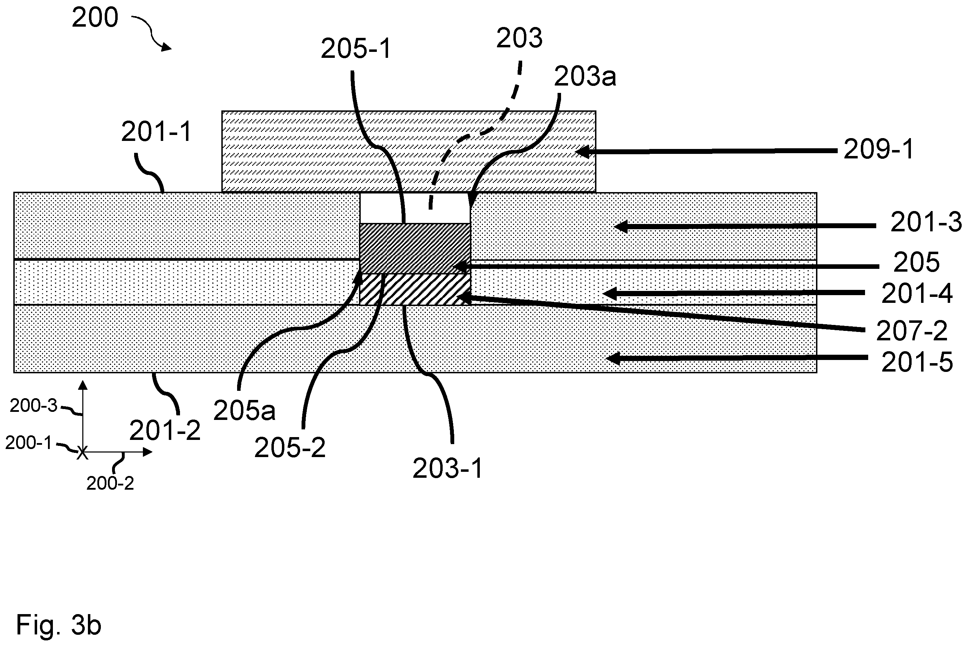

Fig. 3b zeigt ein Sicherheitsdokument 200 gemäß einer Ausführungsform mit einer partiellen Kavität 203 in einer Schnittdarstellung durch die verschiedenen Schichten des Sicherheitsdokuments 200. Im Folgenden werden zwecks Vermeidung von Wiederholungen Unterschiede des in der Fig. 3b dargestellten Sicherheitsdokuments 200 zu dem in der Fig. 3a dargestellten Sicherheitsdokument 200 beschrieben.

Wie in der Fig. 3b dargestellt, kann die Klebeschicht 207-2 eine einseitige Klebeschicht sein, die eine Unterseite 205-2 des integrierten elektronischen Bauelements 205 mit der dritten Schicht 201-5 des Substrats 201 verbindet. Zwischen dem Patch 209-1 und dem elektronischen Bauelement 205 kann in Hochrichtung bzw. Normalenrichtung 200-3 des Sicherheitsdokuments 200 ein Zwischenraum definiert sein, der Teil der Kavität 203 sein kann.

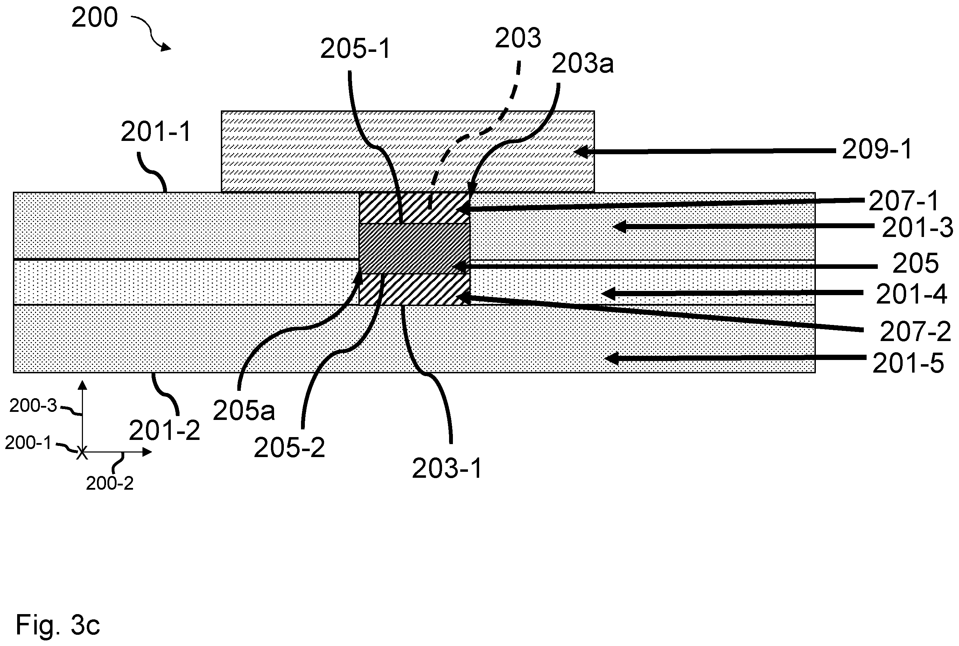

Fig. 3c zeigt ein Sicherheitsdokument 200 gemäß einer Ausführungsform mit einer partiellen Kavität 203 in einer Schnittdarstellung durch die verschiedenen Schichten des Sicherheitsdokuments 200. Im Folgenden werden zwecks Vermeidung von Wiederholungen Unterschiede des in der Fig. 3c dargestellten Sicherheitsdokuments 200 zu dem in der Fig. 3a dargestellten Sicherheitsdokument 200 beschrieben.

Wie in der Fig. 3c dargestellt, kann die Klebeschicht 207-1, 207-2 eine zweiseitige Klebeschicht sein, die die Oberseite 205-1 des integrierten elektronischen Bauelements 205 mit dem Patch 209-1 und die Unterseite 205-2 des integrierten elektronischen Bauelements 205 mit dem Substrat 201 verbindet, insbesondere, wenn sich die Kavität wie hier dargestellt durch die Polymerschicht 201-4 erstreckt, die Unterseite 205-2 des integrierten elektronischen Bauelements 205 mit der untersten Substratschicht, d.h. der dritten Schicht 201-5, des Substrats 201 verbindet.

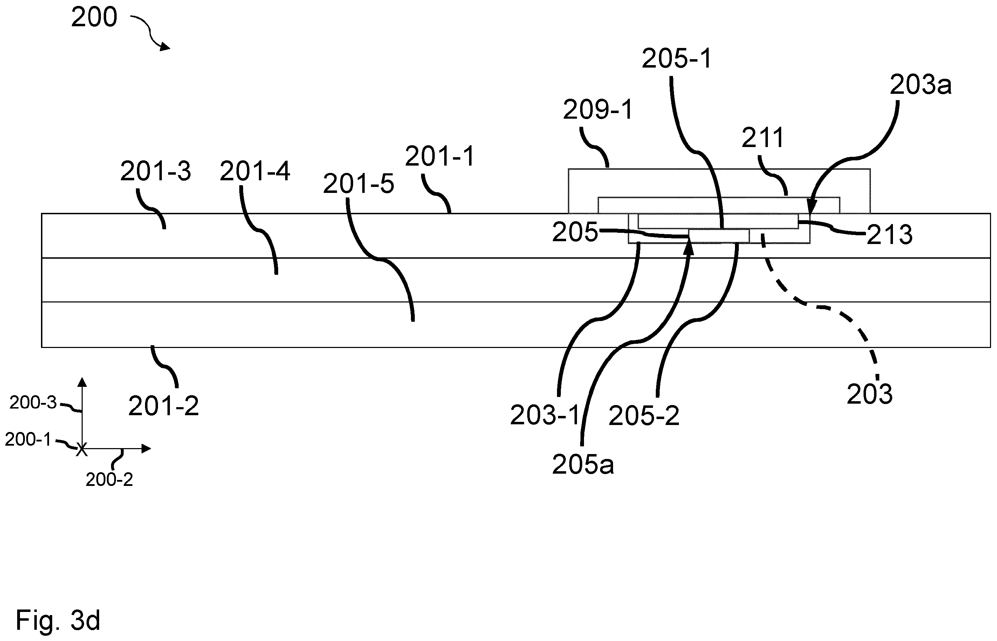

Fig. 3d zeigt ein Sicherheitsdokument 200 gemäß einer Ausführungsform mit einer partiellen Kavität 203 in einer Schnittdarstellung durch die verschiedenen Schichten des Sicherheitsdokuments 200. Im Folgenden werden zwecks Vermeidung von Wiederholungen Unterschiede des in der Fig. 3d dargestellten Sicherheitsdokuments 200 zu dem in der Fig. 3a dargestellten Sicherheitsdokument 200 beschrieben.

Wie in der Fig. 3d dargestellt, kann die Kavität 203 eine partielle Kavität sein, welche an einer Oberseite 201-1 des Substrats 201, in dieser Darstellung der ersten Schicht 201-3 des Substrats 201, ausgeformt ist.

Wie bereits zur Fig. 2d beschrieben, kann das Patch 209-1 einen Träger 211 umfassen, welcher über einer Antenne 213, insbesondere NFC-Antenne, des integrierten elektronischen Bauelements 205 angeordnet ist.

Es ist selbstverständlich, dass die Merkmale der verschiedenen beispielhaft hierin beschriebenen Ausführungsformen, insbesondere der Ausführungsformen der Figuren 2a-2d und 3a-3d, miteinander kombiniert werden können, außer wenn spezifisch anderweitig angegeben. Wie in der Beschreibung und den Zeichnungen dargestellt, müssen einzelne Elemente, die in Verbindung stehend dargestellt wurden, nicht direkt miteinander in Verbindung stehen; Zwischenelemente können zwischen den verbundenen Elementen vorgesehen sein. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

Alle in Verbindung mit einzelnen Ausführungsformen der Erfindung gezeigten oder beschriebenen Merkmale können in beliebiger Kombination in dem erfindungsgemäßen Gegenstand vorgesehen sein, um gleichzeitig deren vorteilhafte Wirkungen zu realisieren.

### BEZUGSZEICHENLISTE

- 100: Verfahren zum Herstellen eines Sicherheitsdokuments
- 101: Bereitstellen eines Substrats während des Verfahrens
- 103: Bereitstellen eines Patches während des Verfahrens
- 105: Einbringen des integrierten elektronischen Bauelements während des Verfahrens
- 107: Aufbringen des Patches während des Verfahrens
- 200: Sicherheitsdokument
- 200-1: Längsrichtung des Sicherheitsdokuments
- 200-2: Querrichtung des Sicherheitsdokuments
- 200-3: Hochrichtung bzw. Normalenrichtung des Sicherheitsdokuments
- 201: Substrat
- 201-1: Oberseite des Substrats
- 201-2: Unterseite des Substrats
- 201-3: Erste Schicht des Substrats
- 201-4: Zweite Schicht des Substrats
- 201-5: Dritte Schicht des Substrats
- 203: Kavität
- 203a: Innenkontur der Kavität
- 203-1: Boden der Kavität
- 205: Integriertes elektronisches Bauelement
- 205a: Außenkontur des integrierten elektronischen Bauelements
- 205-1: Oberseite des integrierten elektronischen Bauelements
- 205-2: Unterseite des integrierten elektronischen Bauelements
- 207-1: Erste Klebeschicht
- 207-2: Zweite Klebeschicht
- 209-1: Patch bzw. erstes Patch
- 209-2: Zweites Patch
- 211: Träger
- 213: Antenne

## Patentansprüche

1. Verfahren (100) zum automatisierten Herstellen eines Sicherheitsdokuments (200), mit:
Bereitstellen (101) eines Substrates (201) mit einer Kavität (203), wobei die Kavität (203) eine Innenkontur (203a) aufweist, die an eine Außenkontur (205a) eines integrierten elektronischen Bauelements (205) angepasst ist, so dass das integrierte elektronische Bauelement (205) unter lagegenauer Positionierung des integrierten elektronischen Bauelements (205) relativ zu der Kavität (203) in die Kavität (203) des Substrates (201) einbringbar ist;
Bereitstellen (103) eines Patches (209-1), wobei das Patch (209-1) eine Abmessung aufweist, die größer ist als eine Abmessung der Kavität (203), so dass das Patch (209-1) unter lagegenauer Positionierung des Patches (209-1) relativ zu der Kavität (203) auf dem Substrat (201) aufbringbar ist und die Kavität (203) abdeckt;
automatisches Einbringen (105) des integrierten elektronischen Bauelements (205) in die Kavität (203) des Substrates (201) unter lagegenauer Positionierung des integrierten elektronischen Bauelements (205) relativ zu der Kavität (203); und
automatisches Aufbringen (107) des Patches (209-1) auf das Substrat (201) und Abdecken, insbesondere Verschließen, der Kavität (203) mit dem eingebrachten integrierten elektronischen Bauelement (205) durch das Patch (209-1) unter lagegenauer Positionierung des Patches (209-1) relativ zu der Kavität (203) des Substrates (201).

2. Verfahren (100) nach Anspruch 1,
wobei das integrierte elektronische Bauelement (205) in die Kavität (203) vor dem Aufbringen des Patches (209-1) eingeführt wird.

3. Verfahren (100) nach Anspruch 1 oder 2,
wobei das integrierte elektronische Bauelement (205) mit dem Substrat (201) stoffschlüssig, insbesondere durch Klebung, verbunden ist.

4. Verfahren (100) nach Anspruch 1,
wobei das integrierte elektronische Bauelement (205) zusammen mit dem Patch (209-1) in die Kavität (203) eingeführt wird.

5. Verfahren (100) nach Anspruch 4,
wobei das integrierte elektronische Bauelement (205) vor dem Einbringen in die Kavität (203) mit dem Patch (209-1) stoffschlüssig, insbesondere durch Klebung, verbunden wird.

6. Verfahren (100) nach Anspruch 4 oder 5,
wobei das integrierte elektronische Bauelement (205) an dem Patch (209-1) befestigt, insbesondere ausschließlich an dem Patch (205), befestigt ist.

7. Verfahren (100) nach einem der Ansprüche 4, 5 oder 6,
wobei das integrierte elektronische Bauelement (205) an dem Patch (209-1) in die Kavität (203) hineinhängend befestigt ist und von einem Boden (203-1) der Kavität (203) beabstandet ist.

8. Verfahren (100) nach einem der vorstehenden Ansprüche,
wobei das automatische Einbringen des integrierten elektronischen Bauelements (205) mittels eines Automaten, insbesondere mittels eines Industrieroboters, ausgeführt wird.

9. Verfahren (100) nach einem der vorstehenden Ansprüche,
wobei die lagegenaue Positionierung des integrierten elektronischen Bauelements (205) relativ zu der Kavität (203) des Substrats (201) basierend auf detektierbaren Markierungen erfolgt, welche auf dem integrierten elektronischen Bauelement (205) und dem Substrat (201) angebracht sind; und/oder
wobei die lagegenaue Positionierung des Patches (209-1) relativ zu der Kavität (203) des Substrats (201) basierend auf detektierbaren Markierungen erfolgt, welche auf dem Patch (209-1) und dem Substrat (201) angebracht sind.

10. Verfahren (100) nach Anspruch 9,
wobei die detektierbaren Markierungen, Passermarken oder Registermarken sensorisch, insbesondere optisch, detektierbar sind und spezielle separate Elemente, oder Bereich oder Schichten des Substrats (201) bilden und/oder selbst Teil des integrierten elektronischen Bauelements (205) und/oder des Patches (209-1) sind.

11. Verfahren (100) nach einem der vorstehenden Ansprüche,
wobei die Kavität (203) eine partielle Kavität ist, welche nur an einer Oberseite (201-1) des Substrats (201) ausgeformt ist; oder
wobei die Kavität (203) eine durchgängige Kavität ist, welche von der Oberseite (201-1) des Substrats (201) bis zu einer Unterseite (201-2) des Substrats (201) durchgängig ausgeformt ist.

12. Verfahren (100) nach Anspruch 11,
wobei das Patch (209-1) auf der Oberseite (201-1) des Substrats (201) aufgebracht wird und die Kavität (203) mit dem eingebrachten integrierten elektronischen Bauelement (205) an der Oberseite (201-1) des Substrats (201) verschließt.

13. Verfahren (100) nach Anspruch 11 oder 12, umfassend:
Aufbringen einer Klebeschicht (207-1) auf das integrierte elektronische Bauelement (205) vor dem Einbringen (105) des integrierten elektronischen Bauelements (205) in die Kavität (203) des Substrates (201).

14. Verfahren (100) nach Anspruch 13, umfassend:
Verbinden des integrierten elektronischen Bauelements (205) mittels der Klebeschicht (207-1) mit dem Patch (209-1) vor dem Einbringen (105) des integrierten elektronischen Bauelements (205) in die Kavität (203) des Substrates (201) und vor dem Aufbringen (107) des Patches (209-1) auf das Substrat (201).

15. Verfahren (100) nach Anspruch 13 oder 14, wobei die Kavität (203) eine durchgängige Kavität ist und das Verfahren (100) ferner umfasst:
Bereitstellen eines zweiten Patches (209-2), wobei das zweite Patch (209-2) eine Abmessung aufweist, die größer ist als die Abmessung der Kavität (203), so dass das zweite Patch (209-2) unter lagegenauer Positionierung des zweiten Patches (209-2) relativ zu der Kavität (203) auf die Unterseite (201-2) des Substrats (201) aufbringbar ist und die Kavität (203) an der Unterseite (201-2) des Substrats (201) abdeckt; und
automatisches Aufbringen des zweiten Patches (209-2) auf die Unterseite (201-2) des Substrats (201) und Abdecken der Kavität (203) mit dem eingebrachten integrierten elektronischen Bauelement (205) an der Unterseite (201-2) des Substrats (201) durch das zweite Patch (209-2) unter lagegenauer Positionierung des zweiten Patches (209-2) relativ zu der Kavität (203).

16. Verfahren (100) nach Anspruch 15,
wobei die Klebeschicht (207-1) eine einseitige Klebeschicht ist, die eine Oberseite (205-1) oder eine Unterseite (205-2) des integrierten elektronischen Bauelements (205) mit dem Patch (209-1) oder dem zweiten Patch (209-2) verbindet; oder
wobei die Klebeschicht (207-1, 207-2) eine zweiseitige Klebeschicht ist, die die Oberseite (205-1) des integrierten elektronischen Bauelements (205) mit dem Patch (209-1) und die Unterseite (205-2) des integrierten elektronischen Bauelements (205) mit dem zweiten Patch (209-2) verbindet.

17. Verfahren (100) nach Anspruch 13 oder 14, wobei die Kavität (203) eine partielle Kavität ist; und
wobei die Klebeschicht (207-1) eine einseitige Klebeschicht ist, die eine Oberseite (205-1) des integrierten elektronischen Bauelements (205) mit dem Patch (209-1) oder eine Unterseite (205-2) des integrierten elektronischen Bauelements (205) mit dem Substrat (201) verbindet; oder
wobei die Klebeschicht (207-1, 207-2) eine zweiseitige Klebeschicht ist, die die Oberseite (205-1) des integrierten elektronischen Bauelements (205) mit dem Patch (209-1) und die Unterseite (205-2) des integrierten elektronischen Bauelements (205) mit dem Substrat (201) verbindet.

18. Verfahren (100) nach einem der vorstehenden Ansprüche,
wobei das Substrat einen Mehrschichtkörper umfasst, der aus zwei oder mehreren übereinanderliegenden Schichten aufgebaut ist, insbesondere aus zwei äußeren Baumwollschichten, die eine innere Polymerschicht umschließen; und
wobei die Kavität (203) in zumindest einer Schicht des Mehrschichtkörpers ausgeformt ist.

19. Verfahren (100) nach einem der vorstehenden Ansprüche,
wobei das integrierte elektronische Bauelement (205) einen integrierten Schaltkreis und eine NFC-Antenne umfasst,
wobei der integrierte Schaltkreis ausgebildet ist, über die NFC-Antenne mit einem externen Terminal zu interagieren und Daten von dem externen Terminal zu empfangen und/oder Daten an das externe Terminal zu senden;
wobei der integrierte Schaltkreis ausgebildet ist, die zu sendenden Daten vor dem Senden kryptografisch zu verschlüsseln und die empfangenen Daten kryptografisch zu entschlüsseln;
wobei der integrierte Schaltkreis insbesondere ausgebildet ist, zumindest eine der Funktionen Tracking, Verifizierung oder Bezahlung auszuführen.

20. Verfahren (100) nach einem der vorstehenden Ansprüche,
wobei das Substrat (201) und das Patch (209-1) jeweils ein Sicherheitsmerkmal umfasst, die zusammenwirken und einen sich überlagernden optischen Effekt generieren.

21. Verfahren (100) nach einem der vorstehenden Ansprüche,
wobei das integrierte elektronische Bauelement (205) ein Sicherheitsmerkmal umfasst, das mit den Sicherheitsmerkmalen des Substrats (201) und des Patch (209-1) zusammenwirkt und darauf basierend ein verknüpftes Sicherheitsmerkmal bereitstellt.

22. Sicherheitsdokument (200), mit:
einem Substrat (201) mit einer Kavität (203);
einem integrierten elektronischen Bauelement (205); und
einem Patch (209-1);
wobei die Kavität (203) eine Innenkontur (203a) aufweist, die an eine Außenkontur (205a) des integrierten elektronischen Bauelements (205) angepasst ist, wobei das integrierte elektronische Bauelement (205) unter lagegenauer Positionierung des integrierten elektronischen Bauelements (205) relativ zu der Kavität (203) in die Kavität (203) des Substrates (201) eingebracht ist;
wobei das Patch (209-1) eine Abmessung aufweist, die größer ist als die Abmessung der Kavität (203), wobei das Patch (209-1) unter lagegenauer Positionierung des Patches (209-1) relativ zu der Kavität (203) auf dem Substrat (201) aufgebracht ist und die Kavität (203) abdeckt, insbesondere verschließt.

23. Sicherheitsdokument (200) nach Anspruch 22,
wobei die Kavität (203) eine partielle Kavität ist, welche nur an einer Oberseite (201-1) des Substrats (201) ausgeformt ist; oder
wobei die Kavität (203) eine durchgängige Kavität ist, welche von der Oberseite (201-1) des Substrats (201) bis zu einer Unterseite (201-2) des Substrats (201) durchgängig ausgeformt ist.

24. Sicherheitsdokument (200) nach Anspruch 22 oder 23,
wobei das integrierte elektronische Bauelement (205) einen integrierten Schaltkreis und eine NFC-Antenne umfasst,
wobei der integrierte Schaltkreis ausgebildet ist, über die NFC-Antenne mit einem externen Terminal zu interagieren und Daten von dem externen Terminal zu empfangen und/oder Daten an das externe Terminal zu senden;
wobei der integrierte Schaltkreis ausgebildet ist, die zu sendenden Daten kryptografisch zu verschlüsseln und die empfangenen Daten kryptografisch zu entschlüsseln;
wobei der integrierte Schaltkreis insbesondere ausgebildet ist, zumindest eine der Funktionen Tracking, Verifizierung oder Bezahlung auszuführen.
